Europäisches Patentamt

(19) European Patent Office

Office européen des brevets

(11) Veröffentlichungsnummer : **0 040 305**
**B1**

(12) **EUROPÄISCHE PATENTSCHRIFT**

(45) Veröffentlichungstag der Patentschrift :
23.05.84

(21) Anmeldenummer : 81102156.7

(22) Anmeldetag : 23.03.81

(51) Int. Cl.³ : **G 02 F 1/133**, G 01 D 13/00,
G 12 B 11/00

(54) **Entspiegelte elektrooptische Anzeige.**

(30) Priorität : 21.05.80 DE 3019311

(43) Veröffentlichungstag der Anmeldung :
25.11.81 Patentblatt 81/47

(45) Bekanntmachung des Hinweises auf die Patenterteilung : 23.05.84 Patentblatt 84/21

(84) Benannte Vertragsstaaten :
FR GB IT SE

(56) Entgegenhaltungen :
EP-A- 0 024 482
DE-A- 2 429 904
DE-A- 2 623 190
FR-A- 2 383 431
GB-A- 1 108 411
GB-A- 2 027 890
US-A- 3 728 007
US-A- 4 032 222
US-A- 4 064 555
US-A- 4 190 832

(73) Patentinhaber : **VDO Adolf Schindling AG**
**Gräfstrasse 103**
**D-6000 Frankfurt/Main (DE)**

(72) Erfinder : **Baeger, Holm, Dr.**
**Salzbornstrasse 1**
**D-6231 Schwalbach (DE)**

(74) Vertreter : **Könekamp, Herbert, Dipl.-Ing.**
**Sodener Strasse 9**
**D-6231 Schwalbach (DE)**

## Beschreibung

Die Erfindung bezieht sich auf eine entspiegelte elektrooptische Anzeige zur Darstellung von Zeichen und Symbolen auf einer einem Betrachter zugewandten Anzeigefläche am Armaturenbrett eines Kraftfahrzeugs.

Bei derartigen Anzeigen besteht das Problem, daß das von außen in den Innenraum des Kraftfahrzeugs einfallende Licht sich derart in der Anzeigefläche spiegeln kann, daß die Ablesbarkeit der Anzeige durch den Betrachter zumindest stark behindert, oft sogar völlig unmöglich gemacht ist. Man hat zur Entspiegelung bei Flüssigkristallanzeigen deshalb schon vorgeschlagen, das Polarisationsfilter konvex auszubilden (EP-A 0 024 482).

Dies hat aber den Nachteil, daß aufgrund des relativ großen Abstandes zwischen der Anzeige in der Ebene der Flüssigkristallschicht und dem Polarisationsfilter der Kontrast der dargestellten Zeichen und Symbole und damit die Lesbarkeit beeinträchtigt ist.

Aus der GB-A 1 108 411 ist eine Anzeige zur Darstellung von Informationen am Armaturenbrett eines Kraftfahrzeuges bekannt. Diese Anzeige besitzt vor ihrer etwa senkrecht zur Fahrzeuglängsachse angeordneten Anzeigefläche ein konkav gewölbtes und gegenüber der Blickrichtung des Betrachters geneigtes Deckglas, das aufgrund seiner Neigung Lichtreflexionen in die Augen des Betrachters verhindern soll.

Dabei vermindern sowohl die gegenüber dem Betrachter verzerrt erkennbaren Zeichen als auch der große Abstand zwischen der Anzeigeebene und dem Deckglas die gute Erkennbarkeit der Anzeige. Außerdem ist durch diesen großen Abstand zwischen Anzeigeebene und Deckglas eine große Bautiefe der Anzeige erforderlich.

Aus der US-A-3 728 007 ist eine elektrooptische Anzeige bekannt, deren Anzeigefläche gegenüber einem Beobachter geneigt ist, damit sich in ihr reflektierende Lichtstrahlen in einen lichtabsorbierenden Schacht geleitet werden.

Aus der DE-A-2 623 190 ist eine im Transmissionsbetrieb arbeitende Flüssigkristallzelle bekannt, deren Zeichen auf eine Projektionsebene projeziert werden. Die Zeichen der gegenüber der Projektionsebene geneigten Flüssigkristallzelle sind derart verzerrt ausgebildet, daß sie auf der Projektionsebene entzerrt scheinen.

Aufgabe der Erfindung ist es, eine Anzeige nach dem Oberbegriff zu schaffen, die gut ablesbar und entspiegelt ist.

Diese Aufgabe wird erfindungsgemäß dadurch gelöst, daß die Anzeigefläche in einer Lage angeordnet ist, in der die Normale auf die Anzeigefläche gegenüber der Längsachse des Fahrzeugs nach unten geneigt ist und das auf der Anzeigefläche reflektierte, von den Fenstern herkommende Licht in einen unter der Blickrichtung des Betrachters liegenden Bereich reflektiert, wobei die Zeichen und Symbole derart verzerrt auf der Anzeigefläche dargestellt sind, daß sie aus der Blickrichtung des Betrachters entzerrt wahrnehmbar sind. Auf diese Art kann ohne besonderen Aufwand eine Entspiegelung der Anzeige in Bezug auf die Blickrichtung des Betrachters erreicht werden. Eine Beeinträchtigung der Lesbarkeit wird bei einer Flüssigkristallanzeige durch den geringen Abstand zwischen der Ebene der Flüssigkristallschicht und dem Polarisationsfilter vermieden. Dieser geringe Abstand bewirkt auch eine geringe Bautiefe der Anzeige. Weiterhin ist diese erfindungsgemäße Anzeige auch leicht herstellbar.

Die Anzeigefläche kann sowohl eben als auch gewölbt ausgebildet sein, wobei bei der gewölbten Ausführung ihr Brennpunkt außerhalb der Blickrichtung des Betrachters liegt. Es ist sowohl eine konvexe als auch eine konkave Wölbung der Anzeigefläche möglich.

Ist die Anzeigefläche so weit zur Blickrichtung des Betrachters geneigt, daß die Normale auf die Anzeigefläche gegenüber der Fahrzeuglängsachse nach unten geneigt ist, so ist praktisch jede Spiegelung auch ohne Vorhandensein einer Hutze ausgeschlossen, da das in das Kraftfahrzeug durch die relativ hoch liegenden Fenster eintretende Licht von der Anzeigefläche nur nach einem unter der Blickrichtung des Betrachters liegenden Bereich reflektiert werden kann.

Damit der Fahrer je nach seiner Sitzposition die ideale Neigung der Anzeigefläche einstellen kann, kann diese schwenkbar angeordnet sein.

Ausführungsbeispiele der Erfindung sind in der Zeichnung dargestellt. Es zeigen

Figur 1   ein erstes Ausführungsbeispiel einer erfindungsgemäßen Anzeige,

Figur 2   ein zweites Ausführungsbeispiel einer erfindungsgemäßen Anzeige,

Figur 3   eine Seitenansicht der Anzeige nach Figur 1,

Figur 4   eine Ansicht der Anzeige nach Figur 3 in Blickrichtung.

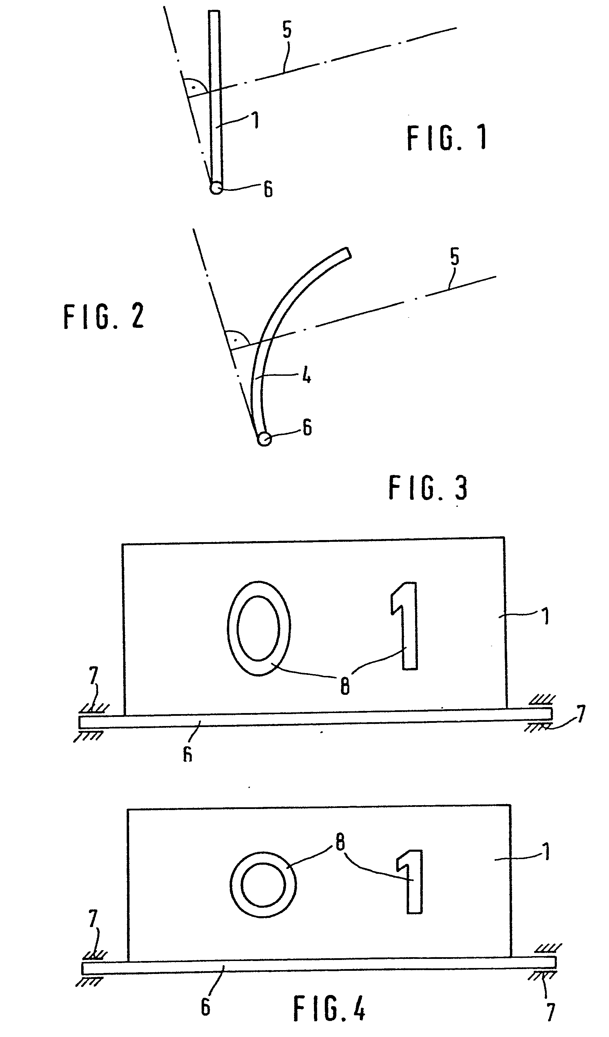

In den Figuren sind mit 1 und 4 die Anzeigeflächen und mit 5 die Blickrichtung des Betrachters bezeichnet. Die Anzeigeflächen 1 und 4 weisen an ihrem unteren Ende eine Achse 6 auf, über die sie in Lagern 7 schwenkbar gelagert sind. Die Anzeigefläche 1 der Figuren 1 und 4 sind eben, während die Anzeigefläche 4 der Figur 3 konkav ausgebildet ist.

In den Figuren sind die Anzeigeflächen 1 und 4 unter einem Winkel kleiner 90 Grad zur Blickrichtung 5 des Betrachters geneigt, was den Vorteil hat, daß auch keine Spiegelung der Windschutzscheibe auf der Anzeigefläche möglich ist. Die besondere Anordnung einer Hutze entfällt daher.

Durch die erfindungsgemäße Anordnung der Anzeigeflächen 1 und 4 wird das in das Innere des Kraftfahrzeugs eintretende Licht in eine den Betrachter nicht beeinflussende Richtung reflektiert.

Damit der Betrachter aufgrund der Neigung der Anzeigefläche 1 und 4 die dargestellten Zeichen 8 und Symbole nicht verzerrt sieht, werden diese, wie in Figur 3 sichtbar, derart verzerrt auf der Anzeigefläche 1 dargestellt, daß sie, wie in Figur 4 zu ersehen, aus der Blickrichtung 5 des Betrachters entzerrt wahrnehmbar sind.

## Ansprüche

1. Entspiegelte elektrooptische Anzeige zur Darstellung von Zeichen und Symbolen auf einer einem Beobachter zugewandten Anzeigefläche am Armaturenbrett eines Kraftfahrzeuges, dadurch gekennzeichnet, daß die Anzeigefläche (1, 4) in einer Lage angeordnet ist, in der die Normale auf die Anzeigefläche (1, 4) gegenüber der Längsachse des Fahrzeugs nach unten geneigt ist und das auf der Anzeigefläche (1, 4) reflektierte, von den Fenstern herkommende Licht in einen unter der Blickrichtung (5) des Betrachters liegenden Bereich reflektiert, wobei die Zeichen (8) und Symbole derart verzerrt auf der Anzeigefläche (1, 4) dargestellt sind, daß sie aus der Blickrichtung (5) des Betrachters entzerrt wahrnehmbar sind.

2. Entspiegelte elektrooptische Anzeige nach Anspruch 1, dadurch gekennzeichnet, daß die Anzeigefläche (1) eben ist.

3. Entspiegelte elektrooptische Anzeige nach Anspruch 1, dadurch gekennzeichnet, daß die Anzeigefläche (4) gewölbt und ihr Brennpunkt außerhalb der Blickrichtung (5) des Betrachters liegt.

4. Entspiegelte elektrooptische Anzeige nach Anspruch 3, dadurch gekennzeichnet, daß die Anzeigefläche konvex gewölbt ist.

5. Entspiegelte elektrooptische Anzeige nach Anspruch 3, dadurch gekennzeichnet, daß die Anzeigefläche (4) konkav gewölbt ist.

6. Entspiegelte elektrooptische Anzeige nach einem der vorhergehenden Ansprüche, dadurch gekennzeichnet, daß die Anzeigefläche (1, 4) schwenkbar angeordnet ist.

7. Entspiegelte elektrooptische Anzeige nach einem der vorhergehenden Ansprüche, dadurch gekennzeichnet, daß die Anzeige eine Flüssigkristallanzeige ist.

## Claims

1. Dereflected electro-optical display for the representing of characters and symbols on a display surface facing the viewer on the dashboard of a motor vehicle, characterised in that the display surface (1, 4) is arranged in a position wherein the perpendicular to the display surface (1, 4) is downwardly inclined relatively to the longitudinal axis of the vehicle, and the light arriving from the windows and reflected at the display surface (1, 4) is reflected into a region which is situated below the viewing direction (5) of the person viewing the display, and the characters (8) and symbols are represented distorted on the display surface (1, 4) in such a manner that they can be perceived with the distortion eliminated from the direction of viewing (5) of the viewer.

2. Dereflected electro-optical display according to claim 1, characterised in that the display surface (1) is plane.

3. Dereflected electro-optical display according to claim 1, characterised in that the display surface (4) is arcuate and its focal point is situated outside of the direction (5) in which the viewer looks at the display.

4. Dereflected electro-optical display according to claim 3, characterised in that the display surface is curved convexly.

5. Dereflected electro-optical display according to claim 3, characterised in that the display surface (4) is curved concavely.

6. Dereflected electro-optical display according to one of the preceding claims, characterised in that the display surface (1, 4) is pivotably arranged.

7. Dereflected electro-optical display according to one of the preceding claims, characterised in that the display is a liquid crystal display.

## Revendications

1. Indicateur électrooptique anti-reflet pour la représentation de signes et de symboles sur une surface d'indication, tournée vers un observateur, sur le tableau de bord d'un véhicule automobile, caractérisé en ce que la surface d'indication (1, 4) est disposée dans une position où la normale à la surface d'indication (1, 4) est inclinée vers le bas par rapport à l'axe longitudinal du véhicule et la lumière provenant des fenêtres et se reflétant sur la surface d'indication (1, 4) est réfléchie dans une zone située en dessous de la direction de vision (5) de l'observateur, les signes (8) et les symboles étant représentés avec déformation sur la surface d'indication (1, 4) de manière qu'ils soient perceptibles sans distorsion dans la direction de vision (5) de l'observateur.

2. Indicateur électrooptique anti-reflet selon la revendication 1, caractérisé en ce que la surface d'indication (1) est plane.

3. Indicateur électrooptique anti-reflet selon la revendication 1, caractérisé en ce que la surface d'indication (4) est incurvée et son foyer est placé en dehors de la direction de vision (5) de l'observateur.

4. Indicateur électrooptique anti-reflet selon la revendication 3, caractérisé en ce que la surface d'indication a une courbure convexe.

5. Indicateur électrooptique anti-reflet selon la revendication 3, caractérisé en ce que la surface d'indication (4) a une courbure concave.

6. Indicateur électrooptique anti-reflet selon l'une des revendications précédentes, caractérisé en ce que la surface d'indication (1, 4) est disposée de façon pivotante.

7. Indicateur électrooptique anti-reflet selon l'une des revendications précédentes, caractérisé en ce que l'indicateur est un indicateur à cristaux liquides.

FIG. 1

FIG. 2

FIG. 3

FIG. 4